(19) Europäisches Patentamt
European Patent Office
Office européen des brevets

(11) **EP 4 664 141 A1**

(12) **EUROPEAN PATENT APPLICATION**

(43) Date of publication:
**17.12.2025 Bulletin 2025/51**

(21) Application number: **24275068.5**

(22) Date of filing: **10.06.2024**

(51) International Patent Classification (IPC):
**G01S 5/02** (2010.01)     **G01S 13/72** (2006.01)

(52) Cooperative Patent Classification (CPC):
**G01S 5/0294; G01S 13/72**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc
Group IP Department
Victory Point
Frimley
Camberley, Surrey GU16 7EX (GB)**

(54) **ESTIMATING TRAJECTORY OF AN AIRBORNE OR AQUATIC OBJECT**

(57)     Embodiments estimate the trajectory of an airborne or aquatic object. Embodiments comprise obtaining (204) track data of an airborne or aquatic object; fitting (210) at least one motion model to the track data using a curve-fitting algorithm to determine parameter values of the at least one motion model, and estimating (210) a trajectory of the object using the parameter values. The at least one motion model estimates the trajectory of the object as a plurality of linearly separable sections.

FIG. 2

EP 4 664 141 A1

**Description**

FIELD OF THE INVENTION

The present invention relates to estimating a trajectory of an airborne or aquatic object.

BACKGROUND

An accurate estimate of the trajectory of an airborne or aquatic object is useful for various technical processes, including ones that contribute to command and control, such as classification, identification or determination of intent of the object. Kalman filters and similar algorithms, e.g. Extended Kalman Filters and Unscented Kalman Filters, are known solutions to tracking problems that can be used during trajectory estimation. However, as at each time step they output the best estimate for track (object) state at that time, given the measurements received so far, they are a noisy estimate for a trajectory. This is for two reasons: firstly, the algorithm does not adjust prior estimation points in the light of new measurements and, secondly, the algorithm typically fits a linear motion model that is not a good fit for complex behaviour (e.g. multiple manoeuvres or oscillating behaviour with unknown frequency).

A suitable, possibly non-linear, model for estimating general trajectories of aircraft and other air platforms is not well-established. A suitable model needs to be physically realistic in that it both recognises discrete changes (manoeuvres) whilst being continuous and within physically attainable bounds for speed and acceleration. Optimisation of model parameters for tactical use cases also needs to be computationally tractable and numerically robust and stable.

SUMMARY

Embodiments of the present invention can address one or more of the above technical problems. Embodiments may solve separable, realistic, nonlinear motion models for the domain of aircraft and other air domain objects, such as missiles and other ballistic projectiles, or for aquatic objects, such as ships, submarines, unmanned surface or underwater vehicles or torpedoes. Embodiments can use novel motion models that are highly detailed but parameterised in a separable way, such that the optimisation computation may be tractable using the VarPro curve-fitting algorithm.

According to a first aspect of the present invention there is provided a computer-implemented method of estimating trajectory of an airborne or aquatic object comprising:

obtaining track data of an airborne or aquatic object;

fitting at least one motion model to the track data using a curve-fitting algorithm to determine parameter values of the at least one motion model, and

estimating a trajectory of the object using the parameter values of the at least one motion model,

wherein the at least one motion model estimates the trajectory of the object as a plurality (or series) of linearly separable sections.

The at least one motion model may comprise a continuously differentiable parametric equation/function. The curve-fitting algorithm may comprise VarPro.

The at least one motion model may comprise a multi-manoeuvre motion model representing multi-manoeuvre motion of the object and comprising a series of waypoints representing a respective series of sections (e.g. constant motion sections) of the trajectory. Each said section may be linear. Each said section can be separated by a change in course and/or speed of the object. A start point of a (subsequent) said section may follow an endpoint of a previous said section.

The at least one motion model may comprise a weaving or spiralling motion model representing weaving or spiralling motion of the object.

In the equation of the multi-manoeuvre motion model a constant term, a first (variable) term, and each term in a sum and a final term may be linearly separable and correspond to an initial position, motion prior to a first manoeuvre, motion between manoeuvres and motion after a final manoeuvre, respectively, of the track data of the object. The equation of the multi-manoeuvre motion model may comprise a linear combination of velocity vectors masked by hyperbolic tangent (tanh) functions integrated over time. Each said section may be masked using a pair of the tanh functions that evaluate to nearly 1 for coordinates within the section and to nearly 0 for coordinates not within the section. In some embodiments the equation of the multi-manoeuvre motion model may comprise:

$$x = x_o + \sum_i v_i \left( \alpha_{i-1} \ln \left( \cosh \left( \frac{t - t_{i-1}}{\alpha_{i-1}} \right) \right) - \alpha_i \ln \left( \cosh \left( \frac{t - t_i}{\alpha_i} \right) \right) \right)$$

where:

x is a position vector of the object;
$x_o$ is a linearly separable constant (e.g. initial) position to be determined;
t is time;
$t_i$ are a set of time constants to be determined;
$\alpha_i$ is a non-linear constant to be determined; and
$v_i$ is a linearly separable velocity to be determined.

Alternatively, arranging constant terms such that $x_o$ is the position at time $t_0$, the equation of the multi-manoeuvre motion model may comprise:

$$x = x_o + \frac{v_1}{2} \left( (t - t_0) - \alpha_1 \ln \left( \cosh \left( \frac{t - t_1}{\alpha_1} \right) \right) + (t_1 - t_0) \right)$$

$$+ \sum_{i=1}^{i=N+1} \frac{v_i}{2} \left( \alpha_{i-1} \ln \left( \cosh \left( \frac{t - t_{i-1}}{\alpha_{i-1}} \right) \right) - \alpha_i \ln \left( \cosh \left( \frac{t - t_i}{\alpha_i} \right) \right) \right)$$

$$+ \frac{v_{N+1}}{2} \left( \alpha_N \ln \left( \cosh \left( \frac{t - t_N}{\alpha_N} \right) \right) + (t - t_N) \right)$$

where:

x is a position vector of the object;
$x_o$ is a linearly separable constant (e.g. initial) position to be determined;
t is time;
$t_i$ are a set of time constants to be determined;
$\alpha_i$ is a non-linear constant to be determined;
$v_i$ is a linearly separable velocity to be determined
$t_0$ is an initial time;
$t_1$ is a time of a first manoeuvre of a series of manoeuvres;
$t_N$ is a time of a last manoeuvre of the series of manoeuvres;
$v_1$ is a linearly separable velocity of a first leg of a manoeuvre of the series of manoeuvres; and
$v_N$ is a linearly separable velocity of a last leg of the manoeuvre.

The equation of the weaving or spiralling motion model may be based on a classical model of simple harmonic motion, which may be considered as a simplest form of continuously differentiable oscillating behaviour. For the weaving or spiralling motion model, linearly separable parts of the equation may correspond to straight-line motion plus a series of cyclical (sinusoidal) components. Each of these components may have different frequencies, amplitudes and orientations.
The weaving or spiralling motion model may comprise a linear combination of sinusoidal functions over time. In some embodiments the equation of the weaving or spiralling motion model may comprise:

$$x = x_o + \overline{v}_o t + \sum_i c_i t \sin \left( {t - t_i}/{\alpha_i} \right)$$

where:

x is a position vector of the object (of the track data);
$x_o$ is a linearly separable initial position to be determined;
t is time;

$t_i$ are a set of time constants to be determined;
$c_i$ are a set of a linear constant vectors to be determined;
$\underline{\alpha_i}$ is a non-linear constant to be determined; and
$\overline{v}_o$ is a linearly separable mean velocity to be determined.

The fitting may comprise fitting at least one said motion model from a plurality of motion models to the track data to determine parameter values of the at least one motion model. The plurality of motion models may comprise the multi-manoeuvre motion model and the weaving or spiralling motion model.

The method may further comprise classifying the object, e.g. based on a previously estimated trajectory of the object, and determining a motion class of the object based on the classification. The determined motion class may be used to select the multi-manoeuvre motion model and/or the weaving or spiralling motion model as the at least one motion model, e.g. for use in a future iteration of the method.

The fitting may comprise computing a measure of closeness of fit (e.g. sum of squares of residuals) of the parameter values to the tracking data. The fitting may output a parameterized estimate of the trajectory based on the parameter values determined for the at least one motion model and the measure of closeness of fit.

The estimating the trajectory may comprise determining one of the plurality of motion models as a most likely estimate of the trajectory based on the parameter values determined for each of the plurality of motion models and the equation(s), e.g. dependent on the closeness of fit. The method may further comprise discretising the estimate of the trajectory into a series of coordinates or points over time steps.

The track data may comprise at least a set of coordinates of the object measured at specific times. The track data may be based on measurements from at least one sensor.

According to another aspect of the present invention there is provided a computing device configured to estimate a trajectory of an airborne or aquatic object substantially as described herein. The device can comprise at least one processor configured to execute a method substantially as described herein. The processor may be configured to:

obtain track data of an airborne or aquatic object;

fit at least one motion model to the track data using a curve-fitting algorithm to determine parameter values of the at least one motion model, and

estimate a trajectory of the object using the parameter values,

wherein the at least one motion model estimates the trajectory of the object as a plurality of linearly separable sections.

The computing device may be located onboard a vehicle.

According to yet another aspect of the present invention there is provided a system comprising a computing device configured substantially as described herein and one or more sensor (or track data source(s)) in communication with the computing device.

According to a further aspect of the present invention there is provided a computer readable medium, or circuit, storing a computer program to operate a method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the invention will now be described by way of example only and with reference to the accompanying drawings:

Figure 1 is a block diagram of a computing device configurable to execute embodiments;

Figure 2 schematically illustrates hardware/software components of an example embodiment;

Figure 3 is a diagram showing a planar view of an example trajectory of an airborne object;

Figure 4 is a diagram illustrating perpendicular components of the example trajectory plotted against time;

Figure 5 is a diagram illustrating each of the perpendicular components as separable tanh functions, as well as actual aggregate motion of the perpendicular components, and

Figure 6 is a diagram illustrating how an example trajectory is separable using the weaving/spiralling motion model of an embodiment.

DETAILED DESCRIPTION

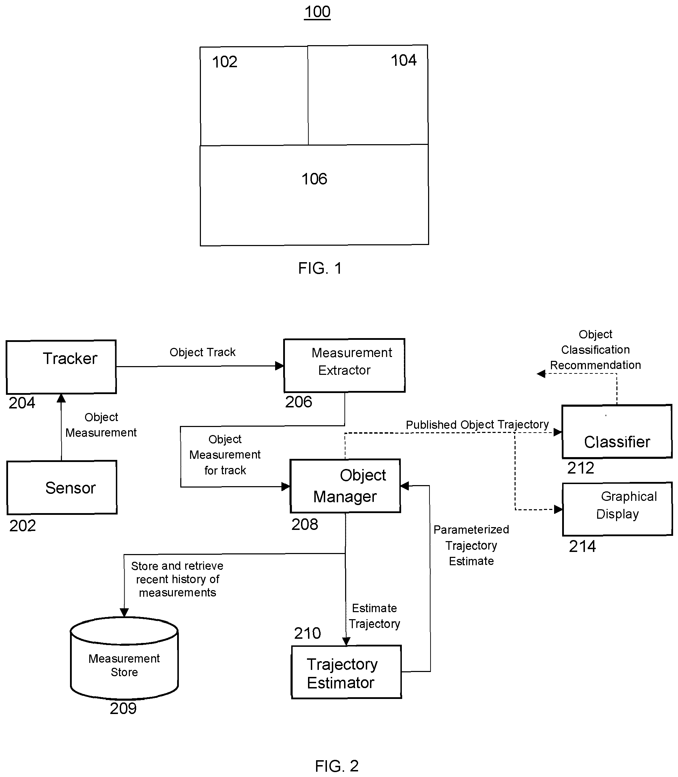

Figure 1 is a simplified block diagram of an example computing device 100 configurable to execute embodiments of the invention. The device 100 will normally comprise, or be associated with, at least one processor 102, memory 104 and a communications interface 106. The at least one processor 102 may comprise one or more of: a microprocessor, a microcontroller and an integrated circuit. The memory 104 may comprise volatile memory, such as random access memory (RAM), for use as temporary memory, and/or non-volatile memory, such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like.

Other components and features of the device 100, such as a housing, power source/supply, display, audio output, user interface, etc, will be well-known to the skilled person and need not be described herein in detail. More than one computing device in communication with each other may be used in some embodiments. For example, one or more of the steps of the methods described herein may be performed by a remote computing device, such as a server or a cloud service, that may be in communication with the device 100.

Figure 2 is a block diagram that schematically illustrates components associated with the computing 100 device configured to execute an example embodiment. One of more of the components may comprise a hardware component in communication with the computing device, or a software component comprising code being executed on the processor 102. In an example scenario the computing device may be operated by a user who wishes to estimate a trajectory of one or more airborne or aquatic object. The device/user may be located remotely from the object, e.g. at a ground station, or may be located in a vehicle, including a vehicle, which may be in a vicinity of the object being tracked.

It will be appreciated that at least one of the components or steps described herein may be re-ordered or omitted. One or more additional components/steps may be present in some cases. In alternative embodiments some of the components/steps may operate concurrently, possibly on different processors or cores. The method can be initiated in any suitable manner, such as an application or function being opened by a user or called by another process. The application may comprise a stand-alone trajectory estimation application/function or may be provided as part of a multi-function application or system. It will also be understood that embodiments can be implemented using any suitable software, programming language, data editors, etc, and may be represented/stored/processed using any suitable data structures and formats.

Embodiments can include, or at least receive signals from, one or more sensor 202. The sensor(s) can output electronic signals comprising any suitable type of data related to object tracking. Examples of suitable sensors include BAE Systems Sampson™ Multi-Function, Thales SMART-L™, Raytheon SPY-6™ and Saab Giraffe™ radars. Navigation radars, such as Raytheon NautoScan NX™ or BAE Systems AWS-10L™ for (maritime) surface objects can also be used, or space-based sensors or self-reporting systems, such as Automatic Identification System (AIS) or Automatic Dependent Surveillance-Broadcast (ADS-B). Alternatively, active sonar sensors, such as Thales BlueMaster/BlueHunter/Blue-Watcher™ series or ATLAS ACTAS™, can be used for estimating trajectories of underwater objects.

If a plurality of sensors are present then they may all be the same, or at least one of them may differ from the others in at least one respect. The one or more sensor 202 may be located remotely from other components of the computing device 100 and/or may communicate with it using any suitable wired or wireless interface. In use, the one or more sensor 202 can detect and make observational measurements of the airborne or aquatic object of interest and then output an appropriate object measurement. Examples of the output include range, azimuth bearing and, optionally, elevation. Typically, polar coordinates will be converted to Cartesian coordinates for use as measurements in a linearly separable motion model. In some cases information representing uncertainty associated with the measurement may also be output. The output can be used as data points for a trajectory estimation process and may be taken from sensor track measurements, sensor track history, fused track history (a track formed from the information from multiple sensors), or samples based on measurement or track covariance.

Embodiments may optionally include a tracker component 204, which can receive as input the object measurement from the sensor(s) 202. The tracker may be configured to combine the most recently received measurement with previously received measurements to form track data. The tracker may use an algorithm, such as nearest-neighbourhood plot-association and/or a Kalman filter (including extended Kalman filter and unscented Kalman filter), for this purpose. Embodiments may approximate any missing uncertainty values. Typically, the tracker will output data comprising a track of the object that represents its state. This may be, for example, in 2D or 3D local Cartesian coordinates, local polar coordinates or geospatial coordinates. The data output may conform to standards such as OARIS (www.omg.org/spec/OARIS) or Asterix (https://www.eurocontrol.int/asterix). In alternative embodiments the sensor(s) 202 may directly output track data, or it may be generated from the output of the sensor(s) in a different manner by a different component.

In some cases the measurements output by the sensor(s) 202 can be related to more than one airborne or aquatic object. Therefore, some embodiments can include components configured to process sensor outputs to generate track data representing the state of one particular object. Embodiments may include a measurement extractor component 206, which can receive object track data, either directly from the sensor(s) 202 or the tracker component 204. The measurement extractor component may be configured to recover, derive or otherwise approximate the sensor measurement corresponding to the current track state of an airborne or aquatic object. The last measurement may be included in the track data. By making assumptions about the tracking process it may be possible to derive an approximate equation for the most recent measurement in terms of the current and previous state and the current and previous uncertainty associated with that state. Otherwise, the embodiment may approximate the latest measurement as being equivalent to the current state of the track. The extractor may output a sensor measurement associated with a particular track (and hence a particular object).

Embodiments may include an object manager component 208, which can receive as input a sensor measurement for a track. The object manager may be configured to store the sensor measurement in a set of the most recent measurements for the track in a data store 209. If it receives more measurements than required, e.g. due to data storage or processing limitations, then the oldest measurement can be discarded. The set of measurements over a recent time period (e.g. around 1 minute for a fast-moving airborne object, or 1 - 10 minutes for a slower-moving aquatic object) stored for that track can then be transferred to a trajectory estimation component 210, e.g. as track data in a trajectory estimate request.

The trajectory estimation component 210 can use at least one motion model to estimate the trajectory. A motion model is intended to represent a class of motion that can be undertaken/performed by an airborne or aquatic object, or a particular type of airborne or aquatic object. The present inventor has identified motion classes that are particularly suitable for trajectory estimation of objects which are also suitable for being represented as parametric equations/functions that can be solved by an efficient curve-fitting algorithm that is used by the trajectory estimation component. In particular, a first example motion model is based on multi-manoeuvre motion, which is good for many objects in the air and maritime domains; whilst objects are generally able to travel in straight lines, journeys tend to comprise a series of waypoints, e.g. to avoid obstacles and to separate traffic travelling in different directions. It is also a convenient format for establishing plans to be followed either automatically or for coordination. Also, on a change in plan, a distinct manoeuvre to a new course and/or speed is likely. Another example motion model is based on weaving or spiralling motion, which is good for adversarial cases where the object is trying to evade countermeasures, such as interception, or to conceal its precise intent or destination.

A motion model will comprise an equation/function that is used for estimating the trajectory. The equation will be suitable for being solved by the curve-fitting algorithm that is used by the trajectory estimation component. In embodiments the curve-fitting algorithm can comprise Variable Projection (VarPro) and the equation will typically comprise a parametric equation that is continuously differentiable so that it is suitable for being solved by VarPro. The VarPro algorithm (see, for example, https://link.springer.com/article/10.1007/s10589-012-9492-9) is a general-purpose algorithm for fitting separable non-linear models to observed data points.

In some embodiments the trajectory estimate request output by the object manager 208 may also specify one or more relevant motion class in relation to the track data of the request. Each motion class may be associated with a particular motion model and so can determine which motion model will be solved. For example, if there is a classification applied to the track's object (e.g. by classifier component 212) then this may increase or decrease the relevance of one of the motion classes and this may be used to determine that one or more particular motion class should be specified in the trajectory estimate request. For instance, the class of an object may be known to exhibit spiralling and weaving behaviour to evade detection and so that motion class is considered relevant. Conversely, an object of a particular class may be incapable of such behaviour, e.g. a large civilian airliner. The object tracker may output one or more trajectory estimate request containing the sensor measurement set for the track (and optionally an uncertainty estimate for each measurement). In other embodiments, one or more specific/default motion model is always used by the trajectory estimation component 210 and so no motion class needs to be specified in the request.

The trajectory estimation component 210 can obtain and process the trajectory estimate request comprising at least track data. It will be understood that some embodiments may only include the trajectory estimation component 210 and not all or some of the other components of Figure 2, with the trajectory estimation component 210 being configured to receive track data of an airborne or aquatic object and to output data representing an estimated trajectory of the object. The track data may be obtained from a data store or other source(s), such as one or more suitable sensor, and in some cases the component 210 itself may process input data, such as sensor measurements, to generate/obtain track data. The track data and output data can be in any suitable format and the data output can be used for any suitable purpose, including the examples discussed below.

The trajectory estimation component 210 executes a curve-fitting algorithm, in particular VarPro, to solve an equation of at least one motion model that estimates a trajectory of the object. VarPro can be used to find the free parameters for the parametric equation for a motion model. VarPro exploits a linearly separable structure within the problem formulation. It is possible to define useful motion models with significant linear decomposition (i.e. separation) when the problem can be expressed in Cartesian coordinates and this decomposition has significant computational advantages, particularly in an operational setting where access to computing resources is constrained, as solving the full non-linear problem may not be tractable or affordable in such a setting. Curve fitting parameters are values that are used to fit a curve to a set of data. The curve is defined by a model/mapping function, which in embodiments will comprise a nonlinear motion model/function. The parameters may be found using the optimization algorithm, e.g. by minimizing the sum of squared errors between the predicted values and the actual values of the track data. Curve fitting involves searching for the parameters to the functional form of the mapping function that result in minimum error, e.g. so that a graph/curve plotted using the mapping function incorporating the determined parameters substantially matches with minimum error a graph/curve that would be plotted based on the track data. The found parameters can be used to make predictions about new data that is not in the original set. VarPro is particularly suitable for fitting a model function that is comprised of both linear and nonlinear parameters, i.e. when the model is separable. Separable models are linear combinations of nonlinear functions. VarPro separates the linear parameters from the nonlinear parameters during the fitting process. It can obtain efficient solutions for the linear parameters and reduce the fitting process to a nonlinear least squares minimization.

Embodiments can use novel motion models that are highly detailed but parameterised in a separable way, such that the optimisation computation is tractable using the VarPro algorithm. Embodiments can use two types of motion models for two broad classes of motion of airborne or aquatic objects, namely a first motion model based on multi-manoeuvre (or ballistic) motion, and a second motion model based on weaving or spiralling motion. Examples of equations that can be used for these motion models by specific embodiments are given below; however, it will be understood that these are merely exemplary and that variations, including mathematically equivalent expressions or operations, etc, may be used by alternative embodiments.

1) First motion model: multi-manoeuvre/ballistic

The function of the multi-manoeuvre motion model can be motivated by a piece-wise approximation of the trajectory that can comprise a series of constant motion sections or legs. Each of these sections may be masked using a pair of tanh (hyperbolic tangent) functions that will evaluate to nearly one during the section and nearly zero otherwise. The function can, however, be continuous and the alpha constant can control the duration of the transition between legs. Integrating over time to calculate position as a function of time from the velocity model can derive the equation below as ln (cosh(x)) - the natural logarithm of hyperbolic cosine - is the integral of tanh. The parametric equation for the multi-manoeuvre motion model may comprise a linear combination of velocity vectors masked by tanh functions integrated over time, e.g.:

$$x = x_o + \sum_i v_i \left( \alpha_{i-1} \ln \left( \cosh \left( \frac{t - t_{i-1}}{\alpha_{i-1}} \right) \right) - \alpha_i \ln \left( \cosh \left( \frac{t - t_i}{\alpha_i} \right) \right) \right)$$

where:

 x is a position vector of the object being tracked;
 $x_o$ is a linearly separable initial position to be determined/solved for;
 t is time;
 $t_i$ are a set of time constants to be determined;
 $\alpha_i$ is a non-linear constant to be determined;
 $v_i$ is a linearly separable velocity to be determined.

The trajectory estimation component 210 can execute the VarPro algorithm based on the obtained track data and the parametric equation to find the free ("to be solved for/determined") parameters for the equation.

Alternatively, arranging constant terms such that $x_o$ is the position at time $t_0$ the equation of the multi-manoeuvre motion model may be expressed as:

$$x = x_o + \frac{v_1}{2}\left((t - t_0) - \alpha_1 \ln\left(\cosh\left(\frac{t - t_1}{\alpha_1}\right)\right) + (t_1 - t_0)\right)$$
$$+ \sum_{i=1}^{i=N+1} \frac{v_i}{2}\left(\alpha_{i-1}\ln\left(\cosh\left(\frac{t - t_{i-1}}{\alpha_{i-1}}\right)\right) - \alpha_i\ln\left(\cosh\left(\frac{t - t_i}{\alpha_i}\right)\right)\right)$$
$$+ \frac{v_{N+1}}{2}\left(\alpha_N \ln\left(\cosh\left(\frac{t - t_N}{\alpha_N}\right)\right) + (t - t_N)\right)$$

where:

$t_0$ is the initial time;
$t_1$ is the time of first manoeuvre;
$t_N$ is the time of last manoeuvre;
$v_1$ is the linearly separable velocity on the first leg; and
$v_N$ is the linearly separable velocity on the last leg.

For the multi-manoeuvre motion model, in general, the constant term, the first (variable) term, each term in the sum and the final term can be linearly separable parts of the equation corresponding to the initial position, motion prior to the first manoeuvre, motion between manoeuvres and motion after the final manoeuvre, respectively. Also, each of these are vector quantities, linearly separable in 2 or 3 dimensions (for 2D or 3D problems, respectively).

2) Second motion model: weaving or spiralling motion

For the weaving or spiralling motion model, the linearly separable parts of its equation can correspond to straight-line motion plus a series of cyclical (sinusoidal) components, each of which can have different frequencies, amplitudes and/or orientations compared to the other parts. The parametric equation for the weaving or spiralling motion model can comprise a linear combination of sinusoidal functions of time, e.g.:

$$x = x_o + \overline{v}_o t + \sum_i c_i t \sin\left(\frac{t - t_i}{\alpha_i}\right)$$

where:

$x$ is the position vector of the object being tracked;
$x_o$ is the linearly separable initial position to be solved for;
$t$ is time;
$t_i$ are a set of time constants to be solved for;
$c_i$ are a set of a linear constant vectors to be solved for;
$\alpha_i$ is a nonlinear constant to be solved for; and
$\overline{v}_o$ is the linearly separable mean velocity to be solved for.

The weaving/spiralling motion model can be composed with the multi-manoeuvre model. For example, a set of sinusoidal terms could be added to each leg; and $v_i$ replaced with

$$\left(v_i + \sum_j c_{ij} t \sin\left(\frac{t - t_{ij}}{\alpha_{ij}}\right)\right).$$

Terms for mean position, velocity and acceleration may be added to the weaving or spiralling motion model equation above (or subtracted from the data as part of pre-normalisation). A variant of the weaving or spiralling motion model can also be obtained by applying exponential or logarithmic decay or growth to the weaving/spiralling motion model.
The trajectory estimation component 210 may be configured to output a parameterized trajectory estimate comprising the parameter values found. This may be done for each motion model corresponding to any motion class(es) specified in the request. The component can also output a measure of the closeness of fit (e.g. the sum of the squares of the residuals) of the determined parameter values with respect to the obtained data set.
Typically, the object manager component 208 may then receive as input the parameterized trajectory estimate generated by the trajectory estimation component 210. The object manager component can use the determined parameter values and the relevant motion model equation(s) to generate an estimated trajectory that is discretised into small time steps (e.g. to calculate a point at each 1 second interval, other time-intervals or schemes with uneven intervals may be more appropriate for different applications). If parameter values for more than one motion model were determined by the trajectory estimation component then the object manager component may choose the parameter values of the most likely trajectory, e.g. dependent on the closeness of fit, but in some cases based on a determined prior likelihood of the motion class for the object in question. The object manager component can output a published object estimated trajectory, which may comprise a series of coordinates or points at either constant time separation (as in a polyline in the TACSIT Data Exchange specification - www.omg.org/spec/TEX) or some other scheme to divide up the time (e.g. at constant separation distance) and a reference to the object itself (i.e. its track).

The estimated trajectory can be used in any suitable manner, such as guiding an object or vehicle towards the tracked object. It may be used to generate control signals for a fully/partially autonomous vehicle. Other example uses include classifying the tracked object and/or generating a display representing its estimated trajectory. The estimated trajectory may also be used to predict the future location of the object as it provides an improved estimate for the object's current motion, which can lead to an improved estimate for future positions (at least until the object changes state and its motion starts to follow a new model as it manoeuvres).

Some embodiments can include a classifier component 212. This can receive as input the estimated object trajectory and may use it to determine which class of a set of known classes of object is most capable and/or most likely to manoeuvre along a motion path indicated by the trajectory. The classifier may use algorithms and/or techniques such as wavelet transforms and gradient boosting classifiers. Embodiments may output an object classification recommendation comprising a classification, a reference to the object (its track) and optionally other metadata such as match likelihood (such as is defined in the Tactical Decision Aids specification - www.omg.org/spec/TDAI).

Additionally or alternatively, embodiments may include a graphical display component 214. This may receive as input the estimated object trajectory and use it to render the object's trajectory geometrically for a system user to view. Geospatial Information Systems (GIS) are instances of such displays, in which case the trajectory is rendered in its proper Earth-referenced coordinates. In alternative use cases, the trajectory may be rendered in a local context such as a synthetic view of a sports field or arena.

The steps performed by the components typically occur within the processing of a stream of sensor measurements (observations). The cycle of steps can be repeated for each subsequent measurement; the stream of measurements may be processed (partly) in parallel.

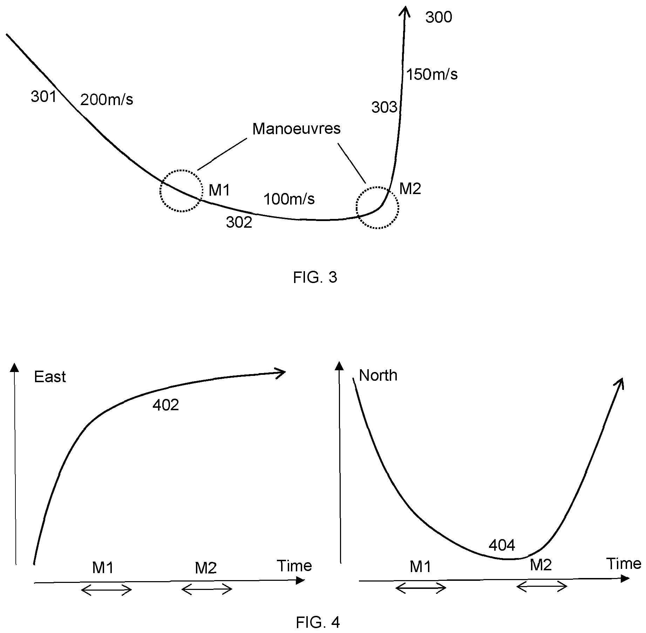

Figure 3 is a diagram showing a planar view of an example trajectory 300 of an airborne object that includes two manoeuvres M1, M2. The diagram illustrates separation of the nonlinear trajectory into three linearly separable sections 301, 302, 303 as would be achieved by an embodiment. The estimated speed of the airborne object during each section is also shown. Each manoeuvre may comprise a change in speed and/or course/direction.

Figure 4 is a diagram illustrating perpendicular components (East 402 and North 404) of the example trajectory 300 plotted against time. As the equations are vector equations, where each element of the vector is orthogonal (perpendicular) to the others, the Figure shows individual scalar elements of the vector (or the dot-product with unit vector along the axis) plotted against time to give a 2D representation.

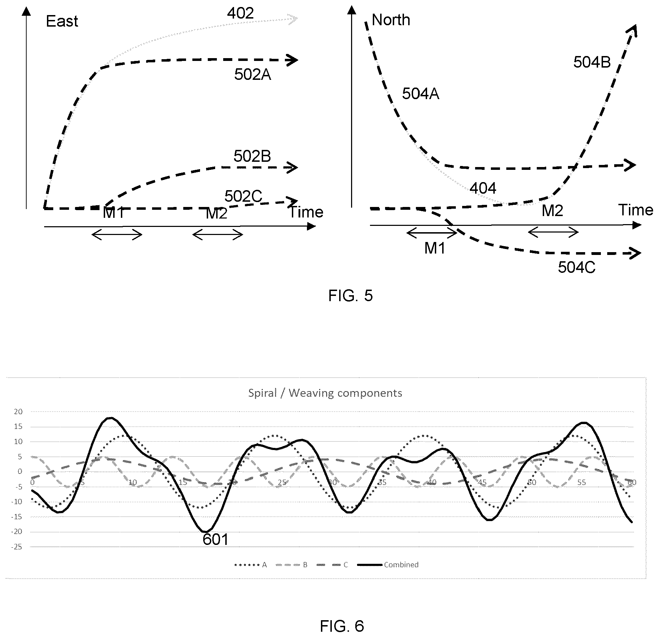

Figure 5 is a diagram illustrating each of the perpendicular components as separable tanh functions (shown as dark dashed lines) from the multi-manoeuvre motion model, as well as the actual aggregate motion (shown as light dots) of the perpendicular components 402, 404. Thus, the nonlinear curve that is a plot of the East component 402 is the aggregate of three linearly separable curves 502A, 502B, 502C that are plotted based on the multi-manoeuvre motion model equation incorporating the parameter values found by the trajectory estimation component 210. Similarly, the nonlinear curve that is a plot of the North component 404 is the aggregate of three linearly separable curves 504A, 504B, 504C that are plotted based on the multi-manoeuvre motion model equation incorporating the parameter values found by the trajectory estimation component.

Figure 6 is a diagram illustrating how an example trajectory is separable using the weaving/spiralling motion model according to an embodiment. The weaving/spiralling motion model is similarly linearly separable and the Figure shows a complex oscillating motion behaviour - shown in 1D as solid line 601 - split into 3 components A, B, C.

Embodiments may offer an improvement on track history because they can estimate trajectories that are not based on straight line motion; do not introduce noisy artefacts due to improved estimates from later information, and may be constrained to output physically attainable values. It is desirable to constrain to physically attainable values to avoid the algorithm producing solutions that are infeasible in reality, due to some poor condition on the data. This can be achieved by some additional regularisation, e.g. for the manoeuvring case, replacing $\alpha_i$ with

$$\sqrt{\alpha_i{}^2 + \varepsilon}$$

for a suitably small value of ε to constrain the implied velocity in the solution.

Terms such as 'component', 'module', 'processor' or'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer-implemented method of estimating trajectory of an airborne or aquatic object comprising:

    obtaining (204) track data of an airborne or aquatic object;
    fitting (210) at least one motion model to the track data using a curve-fitting algorithm to determine parameter values of the at least one motion model, and
    estimating (210) a trajectory of the object using the parameter values,
    wherein the at least one motion model estimates the trajectory of the object as a plurality of linearly separable sections.

2. A method according to claim 1, wherein the at least one motion model comprises a continuously differentiable parametric equation/function and the curve-fitting algorithm comprises VarPro.

3. A method according to claim 1 or 2, wherein the at least one motion model comprises a multi-manoeuvre motion model representing multi-manoeuvre motion of the object and comprising a series of waypoints representing a respective series of sections of the trajectory, wherein each said section is linear and wherein each said section is separated by a change in course and/or speed of the object.

4. A method according to claim 3, where in a function representing the multi-manoeuvre motion model a constant term, a first variable term, and each term in a sum and a final term are linearly separable and correspond to an initial position, motion prior to a first manoeuvre, motion between manoeuvres and motion after a final manoeuvre, respectively, of the track data of the object.

5. A method according to claim 3 or 4, wherein the function representing the multi-manoeuvre motion model comprises a linear combination of velocity vectors masked by hyperbolic tangent, tanh, functions integrated over time, and wherein each said section is masked using a pair of the tanh functions that evaluate to nearly 1 for coordinates within the section and to nearly 0 for coordinates not within the section.

6. A method according to claim 4 or 5, wherein the function representing the multi-manoeuvre motion model comprises:

$$x = x_o + \sum_i v_i \left( \alpha_{i-1} \ln \left( \cosh \left( \frac{t - t_{i-1}}{\alpha_{i-1}} \right) \right) - \alpha_i \ln \left( \cosh \left( \frac{t - t_i}{\alpha_i} \right) \right) \right)$$

where:

x is a position vector of the object;

$x_o$ is a linearly separable constant (e.g. initial) position to be determined;

t is time;

$t_i$ are a set of time constants to be determined;

$\alpha_i$ is a non-linear constant to be determined; and

$v_i$ is a linearly separable velocity to be determined.

7. A method according to claim 3, wherein a function representing the multi-manoeuvre motion model comprises:

$$x = x_o + \frac{v_1}{2}\left((t - t_0) - \alpha_1 \ln\left(\cosh\left(\frac{t - t_1}{\alpha_1}\right)\right) + (t_1 - t_0)\right)$$

$$+ \sum_{i=1}^{i=N+1} \frac{v_i}{2}\left(\alpha_{i-1}\ln\left(\cosh\left(\frac{t - t_{i-1}}{\alpha_{i-1}}\right)\right) - \alpha_i\ln\left(\cosh\left(\frac{t - t_i}{\alpha_i}\right)\right)\right)$$

$$+ \frac{v_{N+1}}{2}\left(\alpha_N\ln\left(\cosh\left(\frac{t - t_N}{\alpha_N}\right)\right) + (t - t_N)\right)$$

where:

x is a position vector of the object;

$x_o$ is a linearly separable constant (e.g. initial) position to be determined;

t is time;

$t_i$ are a set of time constants to be determined;

$\alpha_i$ is a non-linear constant to be determined;

$v_i$ is a linearly separable velocity to be determined

$t_0$ is an initial time;

$t_1$ is a time of a first manoeuvre of a series of manoeuvres;

$t_N$ is a time of a last manoeuvre of the series of manoeuvres;

$v_1$ is a linearly separable velocity of a first leg of a manoeuvre of the series of manoeuvres; and

$v_N$ is a linearly separable velocity of a last leg of the manoeuvre.

8. A method according to any preceding claim, wherein the at least one motion model comprises a weaving or spiralling motion model representing weaving or spiralling motion of the object.

9. A method according to claim 8, where in a function representing the weaving or spiralling motion model, linearly separable parts of the function correspond to straight-line motion plus a series of sinusoidal components over time.

10. A method according to claim 8 or 9, wherein a function representing the weaving or spiralling motion model comprises:

$$x = x_o + \overline{v}_o t + \sum_i c_i t \sin\left(t - t_i / \alpha_i\right)$$

where:

x is a position vector of the object;

$x_o$ is a linearly separable initial position to be determined;

t is time;

$t_i$ are a set of time constants to be determined;

$c_i$ are a set of a linear constant vectors to be determined;

$\alpha_i$ is a non-linear constant to be determined; and

$\overline{v}_o$ is a linearly separable mean velocity to be determined.

11. A method according to claim 8 when dependent on claim 3, further comprising:

classifying (212) the object based on the estimated trajectory of the object, and
determining a motion class of the object based on the classification,
wherein the determined motion class is used to select the multi-manoeuvre motion model and/or the weaving or spiralling motion model as the at least one motion model for use in a future iteration of the method.

12. A method according to any preceding claims, wherein the fitting (210) comprises computing a measure of closeness of fit of the parameter values to the tracking data, and wherein the estimating (210) the trajectory comprises determining one of a plurality of said motion models as a most likely estimate of the trajectory based on the parameter values determined for each of the plurality of motion models.

13. A computer readable medium, or circuit, storing a computer program to operate a method according to any preceding claim.

14. A computing device (100) comprising at least one processor (102) configured to estimate a trajectory of an airborne or aquatic object, wherein the processor is configured to:

obtain track data of an airborne or aquatic object;
fit at least one motion model to the track data using a curve-fitting algorithm to determine parameter values of the at least one motion model, and
estimate a trajectory of the object using the parameter values,
wherein the at least one motion model estimates the trajectory of the object as a plurality of linearly separable sections.

15. A system comprising a computing device (100) according to claim 14 and at least one sensor (202) in communication with the computing device, wherein the computing device is configured to generate the track data based on measurements from the at least one sensor.

## 100

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 24 27 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UTTARA KUMARI M ET AL: "An Improved Radar target tracking system using fusion algorithm of Kalman and Particle filters", 2018 INTERNATIONAL CONFERENCE ON RECENT INNOVATIONS IN ELECTRICAL, ELECTRONICS & COMMUNICATION ENGINEERING (ICRIEECE), IEEE, 27 July 2018 (2018-07-27), pages 2629-2633, XP033727101, DOI: 10.1109/ICRIEECE44171.2018.9009181 [retrieved on 2020-02-24] | 1-5, 12-15 | INV. G01S5/02 G01S13/72 |
| Y | * the whole document * | 6-11 | |
| X | DATABASE INSPEC [Online] THE INSTITUTION OF ELECTRICAL ENGINEERS, STEVENAGE, GB; 30 November 2015 (2015-11-30), ER-WEI BAI ET AL: "Robust tracking of piecewise linear trajectories with binary sensor networks", XP002812647, Database accession no. 15658915 | 1-5, 12-15 | |
| Y | * abstract * & AUTOMATICA ELSEVIER B.V. NETHERLANDS, vol. 61, 30 November 2015 (2015-11-30), pages 134-145, ISSN: 0005-1098, DOI: 10.1016/J.AUTOMATICA.2015.07.012 | 6-11 | **TECHNICAL FIELDS SEARCHED (IPC)** G01S G05D |
| X | CN 112 068 595 A (UNIV NANJING AERONAUTICS & ASTRONAUTICS) 11 December 2020 (2020-12-11) | 1-5, 12-15 | |
| Y | * abstract * | 6-11 | |

-/--

The present search report has been drawn up for all claims

| Place of search | Date of completion of the search | Examiner |
|---|---|---|
| The Hague | 9 December 2024 | Pascheka, Patrick |

page 1 of 3

Europäisches
Patentamt

European
Patent Office

Office européen
des brevets

## EUROPEAN SEARCH REPORT

**Application Number**

EP 24 27 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOTERA JAN ET AL: "Intra-Frame Object Tracking by Deblatting", 2019 IEEE/CVF INTERNATIONAL CONFERENCE ON COMPUTER VISION WORKSHOP (ICCVW), IEEE, 27 October 2019 (2019-10-27), pages 2300-2309, XP033732565, DOI: 10.1109/ICCVW.2019.00283 [retrieved on 2020-03-02] | 1-5, 12-15 | |
| Y | * abstract * | 6-11 | |
| X | JEONG HEE HAN ET AL: "Maritime radar simulator based on DSP board using switched slide window tracker", OCEANS 2008, IEEE, PISCATAWAY, NJ, USA, 15 September 2008 (2008-09-15), pages 1-4, XP031482939, ISBN: 978-1-4244-2619-5 | 1-5, 12-15 | |
| Y | * 5. Conclusion * | 6-11 | |
| Y | GARREN DAVID A ED - HEMMATI HAMID *1954-* [HERAUSGEBERIN] IDENTITY ET AL: "Signature predictions of surface targets undergoing braking maneuvers in squinted spotlight synthetic aperture radar imagery", PROCEEDINGS OF SPIE; [PROCEEDINGS OF SPIE ISSN 0277-786X VOLUME 10524], SPIE, US, vol. 9843, 12 May 2016 (2016-05-12), pages 984303-984303, XP060070867, DOI: 10.1117/12.2224376 ISBN: 978-1-5106-1533-5 * formulae (9)-(11) * | 6,7 | TECHNICAL FIELDS SEARCHED (IPC) |

-/--

The present search report has been drawn up for all claims

| Place of search | Date of completion of the search | Examiner |
|---|---|---|
| The Hague | 9 December 2024 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 24 27 5068

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG SHAOWEI ET AL: "Spiraling motion of underwater gliders: Modeling, analysis, and experimental results", OCEAN ENGINEERING, PERGAMON, AMSTERDAM, NL, vol. 60, 16 January 2013 (2013-01-16), pages 1-13, XP028978452, ISSN: 0029-8018, DOI: 10.1016/J.OCEANENG.2012.12.023 * the whole document * ----- | 8-10 | |
| Y | ZHANG WEI ET AL: "A Multi-Frame Joint Tracking and Classification Method for Weak Target in Radar System", 2022 11TH INTERNATIONAL CONFERENCE ON CONTROL, AUTOMATION AND INFORMATION SCIENCES (ICCAIS), IEEE, 21 November 2022 (2022-11-21), pages 424-429, XP034262199, DOI: 10.1109/ICCAIS56082.2022.9990283 [retrieved on 2022-12-30] * introduction * ----- | 11 | |

TECHNICAL FIELDS
SEARCHED    (IPC)

The present search report has been drawn up for all claims

| Place of search | Date of completion of the search | Examiner |
|---|---|---|
| The Hague | 9 December 2024 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

**EP 4 664 141 A1**

## ANNEX TO THE EUROPEAN SEARCH REPORT
## ON EUROPEAN PATENT APPLICATION NO.

EP 24 27 5068

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | Publication date |
|---|---|---|---|
| CN 112068595 A | 11-12-2020 | NONE | |

For more details about this annex : see Official Journal of the European Patent Office, No. 12/82

EPO FORM P0459

19